**Europäisches Patentamt**

**European Patent Office**

**Office européen des brevets**

(19)

(11) Veröffentlichungsnummer: **0 068 428**
**B1**

(12) # EUROPÄISCHE PATENTSCHRIFT

(45) Veröffentlichungstag der Patentschrift:
04.09.85

(51) Int. Cl.⁴: **F 21 V 9/04, F 21 V 7/22**

(21) Anmeldenummer: **82105507.6**

(22) Anmeldetag: **23.06.82**

(54) Hologenellipsoidreflektorlampe mit einem Kaltlichtreflektor.

(30) Priorität: **26.06.81 DE 3125267**

(43) Veröffentlichungstag der Anmeldung:
**05.01.83 Patentblatt 83/1**

(45) Bekanntmachung des Hinweises auf die Patenterteilung:
**04.09.85 Patentblatt 85/36**

(84) Benannte Vertragsstaaten:
**DE FR GB IT**

(56) Entgegenhaltungen:
**CH - A - 417 997**

(73) Patentinhaber: **Patent-Treuhand-Gesellschaft für elektrische Glühlampen mbH, Hellabrunner Strasse 1, D-8000 München 90 (DE)**

(72) Erfinder: **Döring, Harald, Seelbuschring 22, D-1000 Berlin (DE)**
Erfinder: **Preissner, Jürgen, Lübecker Strasse 13, D-1000 Berlin (DE)**

## Beschreibung

Die Erfindung betrifft eine Halogenellipsoidreflektorlampe mit einem Kaltlichtreflektor, der aus einem Schichtsystem dünner Schichten besteht, die durch Verdampfen von ZnS und $MgF_2$ oder ZnS und SiO auf eine aus Pressglas bestehende ellipsoidförmige Glaskalotte aufgebracht sind, und der Kaltlichtreflektor mit einer Schutzschicht aus $SiO_2$ überzogen ist.

Die Kaltlichtreflektoren dieser Lampen sind mit Spiegelschichten bedampfte ellipsoidförmige Glaskalotten aus Pressglas. Die Spiegelschichten sind Dünnschichtsysteme mit der optischen Dicke pro Schicht von $\lambda/4$ und zusätzlich möglichen Ausgleichsschichten anderer optischer Dicken. Die Wellenlängen sind den spektralen Eigenschaften eines Kaltlichtspiegels angepasst. Die Schichten sind aufgedampft. Das Aufdampfen geschieht im Streugasverfahren oder Hochvakuumverfahren. Die Schichten bestehen aus ZnS und $MgF_2$ oder ZnS und einer durch reaktives Aufdampfen entstehenden Oxidation ($SiO_2$, $Si_2O_3$, ...) von SiO. Die erste Schicht auf der Glaskalotte und die letzte Schicht bei ZnS und $MgF_2$ ist ZnS, bei ZnS und SiO sind beide Materialien möglich.

Schichten aus den Aufdampfmaterialien ZnS und $MgF_2$ bzw. ZnS und SiO werden als «Weiche Schichten» bezeichnet. Sie haben nur eine sehr begrenzte Haltbarkeit bei Lampenbetriebsbedingungen mit Wärmebelastung von $\geq$ 670 K und werden im Mittel nach 100 Stunden mit 670 K und 25 h mit 720 K Wärmebelastung beim Lampenbetrieb unbrauchbar.

Aus der CH-A-417 997 ist bereits ein Kaltlichtspiegel dieser Art bekannt, der zur Erlangung der notwendigen Festigkeit an seiner Aussenschicht mit einer mechanisch haltbaren und wärmebeständigen Beschichtung aus $TiO_2$ versehen ist. Dabei wird im Anschluss an die zuletzt aufgetragene Spiegelschicht metallisches Titan aufgedampft. In einer nachfolgenden, sich über vier Stunden erstreckenden Wärmebehandlung bis zu 440 °C reagiert das Titan mit dem Sauerstoff der Luft und bildet so die den Spiegel schützende Schicht. Verfahrensbedingt bedeckt die 43 µm dicke Schutzschicht nur den Kaltlichtspiegel, wodurch die Gefahr des Abblätterns der relativ dikken Schicht am Reflektorrand besonders gross ist. Dieses gilt insbesondere hinsichtlich der auftretenden hohen Temperaturschwankungen. Des weiteren ist die unbedampfte Rückseite der Spiegelkalotte gegen mechanische Beschädigungen ungeschützt. Darüber hinaus erfordert das Aufbringen der Titanschicht auf den Kaltlichtspiegel beim Aufdampfen sehr genau einzuhaltende Verfahrensparameter sowie beim anschliessenden Oxidieren dieser Schicht einen hohen Aufwand an Energie und Zeit.

Aufgabe der Erfindung ist es, bei einer Halogenellipsoidreflektorlampe mit den im Oberbegriff des Hauptanspruchs genannten Merkmalen die Haltbarkeit des Kaltlichtreflektors zu verbessern und zusätzlich ein vereinfachtes Verfahren zum Aufbringen der Schutzschicht zu finden.

Diese Aufgabe wird erfindungsgemäss dadurch gelöst, dass sich die Schutzschicht aus $SiO_2$ ausser auf das Schichtsystem des Kaltlichtspiegelreflektors auch auf den Rand und die äussere Oberfläche der Glaskalotte erstreckt. Die Schutzschicht wird vorteilhafterweise aufgebracht, indem nach dem Aufdampfen des Schichtsystems aus ZnS und $MgF_2$ oder ZnS und SiO die Glaskalotte mit dem Schichtsystem des Kaltlichtspiegelreflektors in eine $SiO_2$-Lösung getaucht oder mit der $SiO_2$-Lösung besprüht wird, und der so aufgetragene Überzug anschliessend vorgetrocknet und durch Erwärmen ausgehärtet wird und eine feste $SiO_2$-Schicht bildet. Die Dicke der auf diese Weise aufgetragenen Schutzschicht beträgt nur ca. 5 bis 12 µm. Mit ihr wird die Haltbarkeit der Kaltlichtreflektoren vorstehend genannter Lampen um mehr als 800 Stunden gegenüber dem Bekannten erhöht. Für die Verspiegelung ergibt sich zusätzlich eine verbesserte Transmissionseigenschaft im IR-Wellenlängenbereich.

Nachfolgend ein Ausführungsbeispiel. Von den Figuren zeigen
Figur 1 eine Halogenellipsoidreflektorlampe;
Figur 2 einen Reflektorausschnitt.

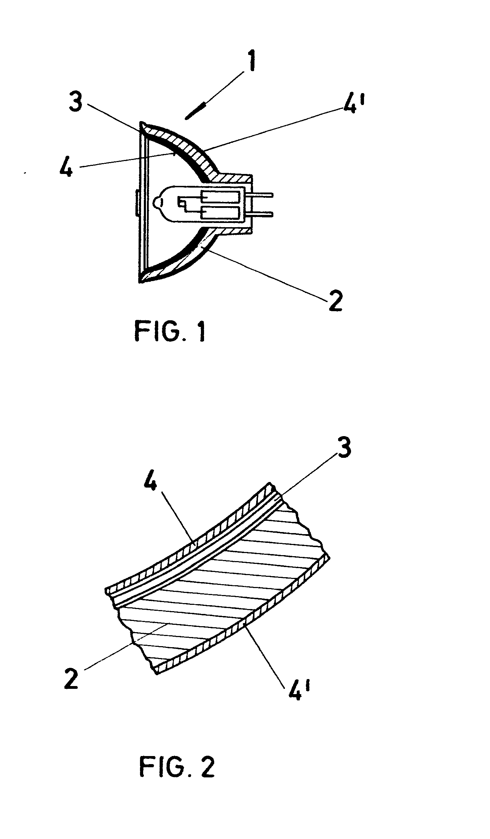

Die ellipsoidförmige Glaskalotte 2 aus Pressglas der Halogenellipsoidreflektorlampe 1 weist ein Schichtsystem 3 aus abwechselnd aufgebrachten dünnen Schichten aus ZnS und $MgF_2$ auf. Die erste und die letzte Schicht bestehen aus ZnS (Figuren 1 und 2). Die Kaltlichtspiegelschichten sind auf die Glaskalotte 2 in zwei Schichtpaketen mit $19 \, ^{+4}_{-2}$ Schichten im Streugasverfahren aufgedampft. Das Schichtsystem 3 ist überzogen mit einer $SiO_2$-Schicht 4, die eine Dicke von etwa 10 µm besitzt. Diese Schutzschicht 4 wird mittels Tauchen aufgebracht. Nach dem Bedampfen – Aufbringen von ZnS und $MgF_2$ – werden die soweit fertiggestellten Kaltlichtreflektoren in ein $SiO_2$-Tauchbad getaucht. Das Eintauchen und das Herausziehen aus dem Tauchbad erfolgt mit konstanter Geschwindigkeit von etwa 20 cm/min. Getaucht wird bis zum Halsansatz des Reflektors. Dabei werden auch der Rand und die äussere Oberfläche der Glaskalotte 2 benetzt, was zur Ausbildung einer $SiO_2$-Schicht 4' an diesen Stellen führt. Die zunächst noch flüssige $SiO_2$-Schicht wird nach dem Tauchen bei Raumtemperatur etwa 10 min vorgetrocknet und anschliessend durch Erwärmen ausgehärtet.

## Patentansprüche

1. Halogenellipsoidreflektorlampe mit einem Kaltlichtreflektor, der aus einem Schichtsystem (3) dünner Schichten besteht, die durch Verdampfen von ZnS und $MgF_2$ oder ZnS und SiO auf eine aus Pressglas bestehende ellipsoidförmige Glaskalotte (2) aufgebracht sind, und der Kaltlichtreflektor mit einer Schutzschicht (4) aus $SiO_2$ überzogen ist, dadurch gekennzeichnet, dass sich die Schutzschicht (4, 4') aus $SiO_2$ ausser auf das

Schichtsystem (3) des Kaltlichtspiegelreflektors auch auf den Rand und die äussere Oberfläche der Glaskalotte (2) erstreckt.

2. Verfahren zur Herstellung einer Halogenellipsoidreflektorlampe nach Anspruch 1, dadurch gekennzeichnet, dass nach dem Aufdampfen des Schichtsystems (3) aus ZnS und MgF₂ oder ZnS und SiO die Glaskalotte (2) mit dem Schichtsystem (3) des Kaltlichtspiegelreflektors in eine SiO₂-Lösung getaucht oder mit der SiO₂-Lösung besprüht wird, und der so aufgetragene Überzug anschliessend vorgetrocknet und durch Erwärmen ausgehärtet wird und eine feste SiO₂-Schicht (4, 4') bildet.

## Revendications

1. Lampe à réflecteur ellipsoïdal à halogène comportant un réflecteur à lumière froide qui est constitué par un système de couches (3) avec des couches minces qui sont déposées par vaporisation de ZnS et MgF₂ ou ZnS et SiO sur une calotte en verre (2) ellipsoïdale constituée par du verre comprimé, et le réflecteur à lumière froide est revêtu d'une couche de protection (4) en SiO₂, caractérisée en ce que la couche de protection (4, 4') en SiO₂ s'étend non seulement sur le système de couches (3) du réflecteur miroir à lumière froide, mais également sur le bord et sur la face supérieure externe de la calotte en verre (2).

2. Procédé pour fabriquer une lampe à réflecteur ellipsoïdal à halogène selon la revendication 1, caractérisé en ce que, après vaporisation du système de couches (3) en ZnS et MgF₂ ou ZnS et SiO, la calotte en verre (2) avec le système de couches (3) du réflecteur miroir à lumière froide est plongée dans une solution de SiO₂ ou bien est pulvérisée par une solution de SiO₂, et en ce que le revêtement ainsi appliqué est ensuite préalablement séché et durci par chauffage et forme une couche colide de SiO₂ (4, 4').

## Claims

1. A halogen lamp with an ellipsoid dichroic reflector consisting of a layer system (3) of thin layers applied by vapour deposition of ZnS and MgF₂ or ZnS and SiO on a glass cup (2) consisting of pressed glass, the dichroic reflector being coated with a protective layer (4) of SiO₂, wherein the protective layer (4, 4') of SiO₂ extends not only over the layer system (3) of the dichroic reflector but also over the rim and the outer surface of the glass cup (2).

2. A method of manufacturing a halogen lamp with an ellipsoid reflector according to claim 1, wherein, upon the vapour deposition of the layer system (3) of ZnS and MgF₂ or ZnS and SiO, the glass cup (2) with the layer system (3) of the dichroic reflector is dipped into a SiO₂ solution or has a SiO₂ solution sprayed onto it, and the coating so applied is subsequently predried and hardened by heating whereby a solid SiO₂ layer (4, 4') is formed.

**FIG. 1**

**FIG. 2**